# EUROPÄISCHE PATENTSCHRIFT

(11) **EP 0 867 086 B1**
(45) Veröffentlichungstag und Bekanntmachung des Hinweises auf die Patenterteilung: **19.06.2002**
(21) Anmeldenummer: 96946046.8
(22) Anmeldetag: 05.12.1996
(51) Int. Cl.: H04N 1/03, H04N 5/66

(54) **BILDAUFNAHMEEINRICHTUNG**
IMAGE RECORDING SYSTEM
DISPOSITIF DE PRISE DE VUE

(30) Priorität: 06.12.1995 DE 19545484
(43) Veröffentlichungstag der Anmeldung: 30.09.1998
(73) Patentinhaber: Deutsche Telekom AG, 53113 Bonn (DE)
(72) Erfinder: KOOPS, Hans, W., P., D-64372 Ober-Ramstadt (DE); HÄRTEL, Erhard, D-53639 Königswinter (DE)
(86) Internationale Anmeldenummer: DE9602335
(87) Internationale Veröffentlichungsnummer: WO9721301

(56) Entgegenhaltungen:
- EP-A- 0 154 962
- EP-A- 0 348 003
- DE-A- 3 140 217
- DE-A- 3 643 576
- DE-A- 4 029 246
- US-A- 5 130 531
- PATENT ABSTRACTS OF JAPAN vol. 8, no. 243 (E-277), 8.November 1984 & JP 59 121974 A (FUJITSU KK), 14.Juli 1984,

## Beschreibung

Die Erfindung betrifft eine Bildaufnahmeeinrichtung gemäß dem Oberbegriff des Anspruchs 1.

Bildaufnahmeeinrichtungen mit mindestens einem Photodetektor pro aufzunehmendem Bildelement sind als sogenannte CCD-Kameras bekanntgeworden, bei denen vor einem die Photodetektoren rasterförmig enthaltenden Halbleitersensor ein Objektiv angeordnet ist.

Aus der DE-A-31 40 217 ist ein Gerät zum Lesen einer Vorlagenfläche mit einer Bildinformation bekannt, das die Bildinformation unter Verwendung eines Photosensors zur Abbildung über eine Vielzahl von Abbildungssystemen bewegt. Das bekannte Geräte besitzt allerdings eine feste Gegenstandsweite und die Abbildungssysteme sind nicht in der Lage, den Blickwinkel des Lesegerätes zu ändern.

Der Erfindung liegt daher die Aufgabe zugrunde, eine Bildaufnahmeeinrichtung zu schaffen, die diese Nachteile beseitigt.

Die erfindungsgemäße Bildaufnahmeeinrichtung ist in der Lage, Bilder von ihr gegenüberstehenden Objekten mit großer Schärfentiefe aufzunehmen. Wird der Abstand zwischen den einzelnen Photodetektoren gleich dem Abstand (Rastermaß) der fokussierenden Elemente gewählt, erfolgt eine Abbildung stets im Maßstab 1 zu 1.

Eine vorteilhafte Herstellung einer erfindungsgemäßen Bildaufnahmeeinrichtung ist bei einer Weiterbildung der Erfindung dadurch möglich, daß das fokussierende Element eine refraktive Mikrolinse, eine refraktive Fresnel-Mikrolinse oder eine Zonenplatte ist, wobei die fokussierenden Elemente für alle abzubildenden Bildelemente durch Strukturierung eines transparenten Trägers gebildet sind.

Eine andere Weiterbildung besteht darin, daß jeweils einem fokussierenden Element mehrere wahlweise aktivierbare Photodetektoren zugeordnet sind. Durch diese Weiterbildung kann mit Hilfe einer Einrichtung mit einer oder wenigen Zeilen von fokussierenden Elementen durch Abtastung quer zur Zeilenrichtung ein flächenhaftes Bild aufgenommen werden. Diese Weiterbildung ermöglicht jedoch auch, bei einer bereits flächenhaften, d.h. rasterförmigen Anordnung der Photodetektoren und der fokussierenden Elemente eine elektrische Änderung der Blickrichtung der Bildaufnahmeeinrichtung vorzunehmen.

Eine vorteilhafte Ausgestaltung der erfindungsgemäßen Bildaufnahmeeinrichtung besteht darin, daß die Strukturen der fokussierenden Elemente rotationssymmetrisch sind, wobei der optische Mittelpunkt in der Mitte der jeweils einem fokussierenden Element zugeordneten Fläche liegt. Diese Ausgestaltung ist in erster Linie dafür vorgesehen, Objekte aufzunehmen, die sich gerade vor der Bildaufnahmeeinrichtung befinden. Dabei ist ein Schwenken der Blickrichtung durch die obengenannte Weiterbildung möglich. Eine andere vorteilhafte Ausgestaltung ist für eine davon abweichende Blickrichtung dadurch ausgelegt, daß das fokussierende Element asymmetrisch aufgebaut ist, so daß bei einem mittig angeordneten Photodetektor eine schräge Blickrichtung vorliegt.

Bei der erfindungsgemäßen Bildaufnahmeeinrichtung werden die nicht von einem Photodetektor aufzunehmenden Teile des Objekts neben dem Photodetektor abgebildet. Damit keine Qualitätseinbußen durch Streulicht entstehen, ist bei einer anderen Weiterbildung der Erfindung vorgesehen, daß nicht mit Photodetektoren belegte Flächen eines die Photodetektoren tragenden Trägers absorbierend ausgebildet sind.

Eine Ausgestaltung der erfindungsgemäßen Bildaufnahmeeinrichtung zur Aufnahme von farbigen Bildern ist dadurch möglich, daß den Photodetektoren Farbfilter verschiedener Farben zugeordnet sind.

Wie bei anderen Bildaufnahmeeinrichtungen kann die Umwandlung des auf den Photodetektor auftreffenden Lichts in ein elektrisches Signal durch Erzeugung einer der Lichtmenge entsprechenden Ladung erfolgen. Da die Lichtmenge je Photodetektor bei der erfindungsgemäßen Bildaufnahmeeinrichtung sehr gering ist, wird vorzugsweise vorgeschlagen, daß zum Auslesen der in jeweils einem Photodetektor in Abhängigkeit der Lichtintensität entstehenden Ladung Einzel-Elektronen-Tunnel-Bauelemente vorgesehen sind. Einzel-Elektronen-Tunnel-Bauelemente (SED = Single electron devices) sind beispielsweise beschrieben in A. H. Clealand "The detection and manipulation of single electrons", Digest of Papers MicroProcess '94, 7^{th} International MicoProcess Conference Hsinchu, Taiwan, July 11-14, 1994, pages 146-149.

Die beschriebenen Bauelemente müssen aufgrund ihrer Größe jedoch zur Erzielung eines ausreichenden Störabstandes gekühlt betrieben werden. Dieses ist jedoch nicht nötig, wenn gemäß einer Weiterbildung der Erfindung die Strukturen der Einzel-Elektronen-Tunnel-Bauelemente kleiner als 10 nm sind. Dabei ist vorzugsweise vorgesehen, daß auf dem die Photodetektoren tragenden Träger Leiterbahnen zur Spannungsversorgung und zur Ableitung der Signale durch Lithographie aufgebracht sind.

Bei einer Reihe von Anwendungen, beispielsweise bei Video-Telefonen, ist die gleichzeitige Aufnahme eines zu suchenden Bildes und die Wiedergabe eines empfangenen Bildes erforderlich. Dieses kann bei der erfindungsgemäßen Bildaufnahmeeinrichtung in besonders vorteilhafter Weise durch die gemeinsame Ausbildung mit einem Bildschirm, insbesondere einem Farb-Bildschirm, erfolgen.

Eine vorteilhafte Ausgestaltung einer solchen Einrichtung zur Aufnahme und Wiedergabe besteht darin, daß zwischen dem die fokussierenden Elemente bildenden Träger und dem Träger für die Photodetektoren ein Hohlraum vorgesehen ist, daß an der inneren Seite des Trägers für die fokussierenden Elemente Leuchtstoff-Flächenelemente aufgebracht sind und daß auf dem Träger für die Photodetektoren steuerbare Elektronenquellen angeordnet sind, die jeweils einem Leuchtstoff-Flächenelement zugeordnet sind.

Bei einer anderen vorteilhaften Ausgestaltung der Einrichtung zur Aufnahme und Wiedergabe wird vorgeschlagen, daß für Leuchtstoff-Flächenelemente des Bildschirms ein weiterer Träger auf dem Träger für die fokussierenden Elemente aufliegt und daß für steuerbare Elektronenquellen ein weiterer Träger parallel zum Träger für die Photodetektoren vorgesehen ist.

Vorzugsweise sind bei diesen Ausgestaltungen die steuerbaren Elektronenquellen von jeweils mindestens einer Emitterspitze und Extraktordrähten gebildet.

Die Emitterspitzen und die Extraktordrähte sind vorzugsweise durch korpuskularstrahl-induzierte Deposition hergestellt. Die Herstellung dieser Bildpunkt-Strahlungsquellen ist in der Patentanmeldung P 44 16 597.8 der Anmelderin beschrieben.

Um eine Belichtung der Photodetektoren durch die Leuchtstoff-Flächenelemente zu verhindern, kann gemäß einer anderen Weiterbildung der Erfindung vorgesehen sein, daß die Elektronenquellen und die Photodetektoren im Zeitmultiplex betreibbar sind.

Ausführungsbeispiele der Erfindung sind in der Zeichnung anhand mehrerer Figuren dargestellt und in der nachfolgenden Beschreibung näher erläutert. Es zeigt:
- Fig. 1: einen Schnitt durch einen Teil eines ersten Ausführungsbeispiels mit einer Mikrolinse,
- Fig. 2: einen Schnitt durch einen Teil eines zweiten Ausführungsbeispiels mit einer Mikrolinse,
- Fig. 3: einen Schnitt durch ein erstes Ausführungsbeispiel mit einer Fresnel-Mikrolinse,
- Fig. 4: einen Schnitt durch ein zweites Ausführungsbeispiel mit einer Fresnel-Mikrolinse,
- Fig. 5: ein Anwendungsbeispiel einer erfindungsgemäßen Bildwiedergabe- und -aufnahmeeinrichtung,
- Fig. 6: eine vergrößerte schematische Darstellung eines Ausführungsbeispiels eines Photodetektors,
- Fig. 7: einen Schnitt durch ein erstes Ausführungsbeispiel einer Bildwiedergabe- und -aufnahmeeinrichtung und
- Fig. 8: einen Schnitt durch ein zweites Ausführungsbeispiel einer Bildwiedergabe- und -aufnahmeeinrichtung.

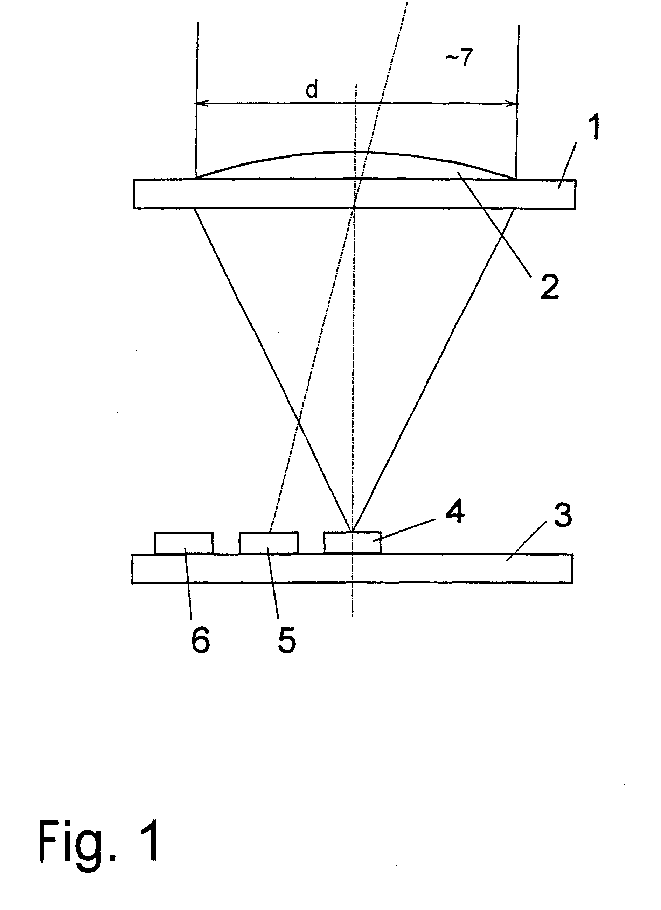

Bei der in Fig. 1 dargestellten Bildaufnahmeeinrichtung sind in einem Rasterabstand d auf einem ersten Träger 1 rasterförmig Mikrolinsen 2 angeordnet. In der Brennebene der Mikrolinsen befinden sich auf einem zweiten Träger 3 jeweils gegenüber einer Mikrolinse Photodetektoren 4, deren Abmessungen derart klein sind, daß ihre Abbildungen auf dem nicht dargestellten aufzunehmenden Gegenstand auch bei der größten bei der erfindungsgemäßen Bildaufnahmeeinrichtung vorgesehenen Gegenstandsweite noch etwa der Größe der Mikrolinsen entspricht. Die Mikrolinsen 2 sind dicht nebeneinander angeordnet, so daß jeweils eine Mikrolinse ein Bildelement des Objekts auf einen Photodetektor 4 abbildet. Die Zwischenräume zwischen den Photodetektoren 4 können unbelegt sein. Vorzugsweise verhindert eine Schwärzung eine Remission des von benachbarten Bildelementen des Objekts einfallenden Lichts, was wiederum zu Streulicht führen würde. Es können jedoch auch weitere Photodetektoren 5, 6 angeordnet sein. Wird beispielsweise der Photodetektor 5 anstelle des Photodetektors 4 verwendet, so "blickt" die Bildaufnahmeeinrichtung gemäß der strichpunktierten Linie 7 zur Seite. Dieses kann statisch erfolgen - d.h., es kann ein dauernder oder länger anhaltender Winkel eingestellt werden - oder in rascher Folge wechselnd, so daß eine Bildabtastbewegung entsteht.

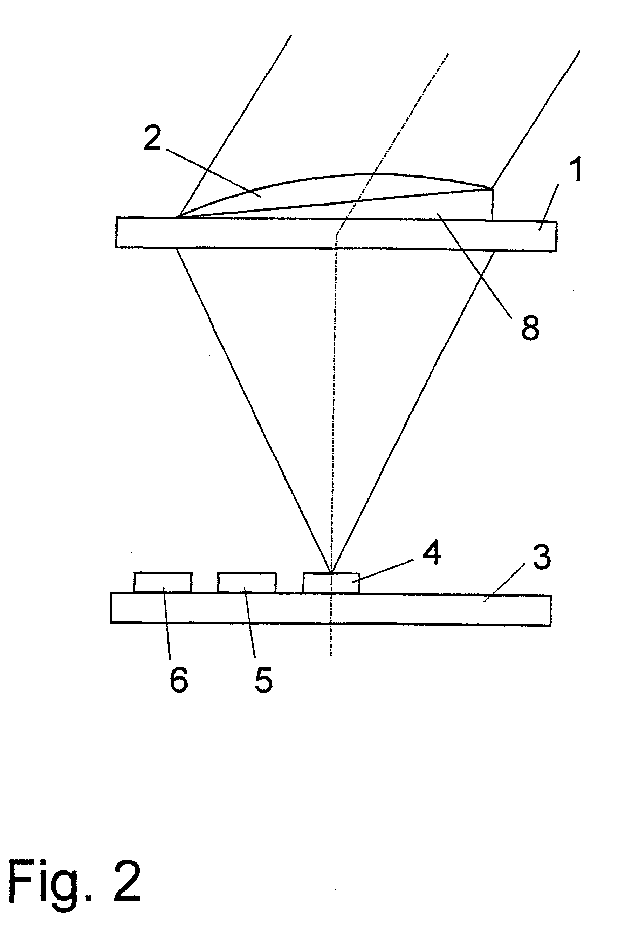

Bei dem Ausführungsbeispiel nach Fig. 2 ist die Mikrolinse 2 auf einem Prisma 8 angeordnet, so daß die Bildaufnahmerichtung bereits mit einem Winkel β zur Seite "blickt", wenn der Photodetektor 4 mittig der Mikrolinse 2 gegenübersteht. Zusätzlich kann eine Änderung des Blickwinkels durch eine Auswahl eines der Photodetektoren 4, 5, 6 erfolgen.

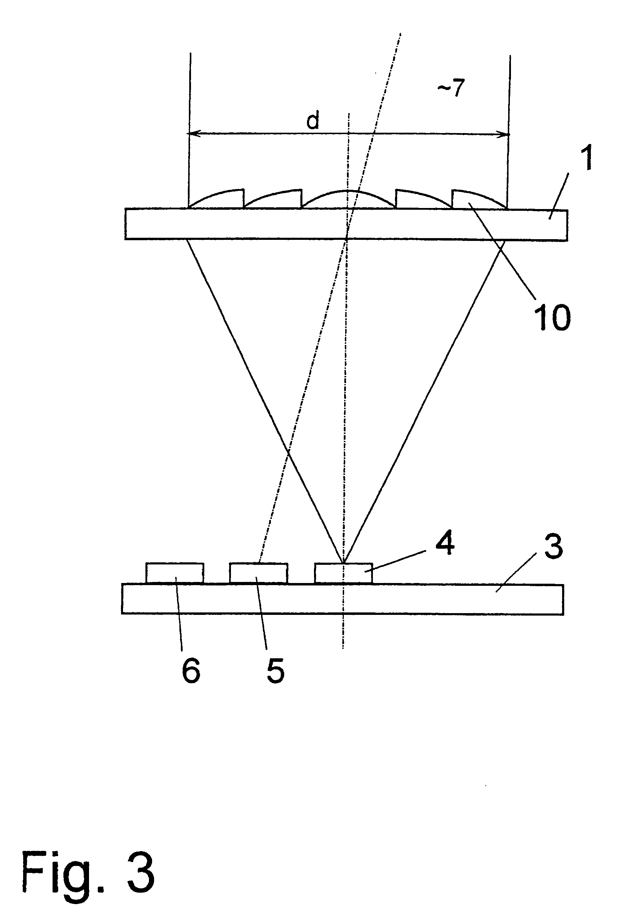

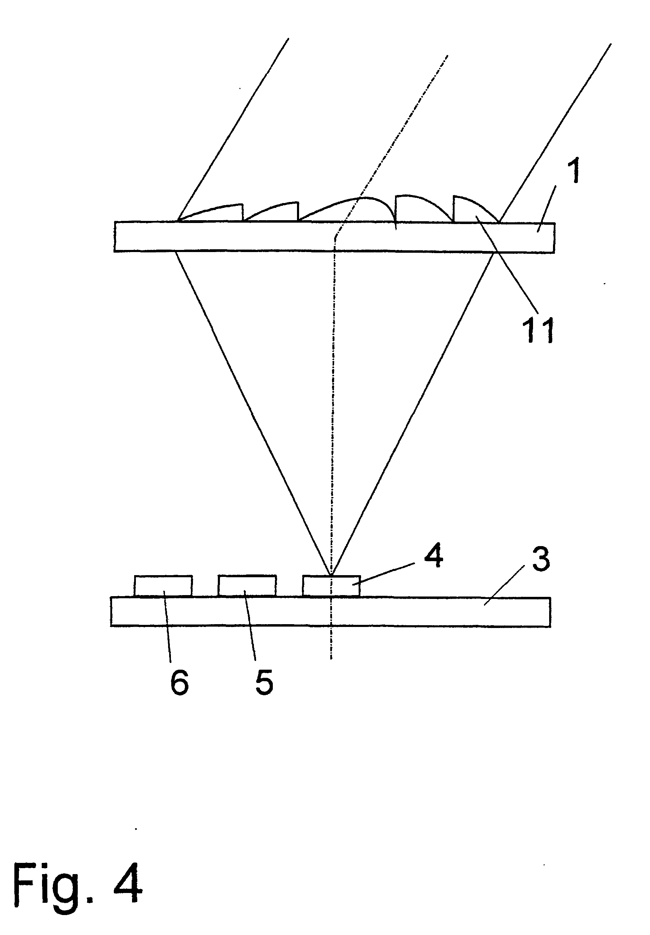

Bei den Ausführungsbeispielen nach den Figuren 3 und 4 ist als fokussierendes Element jeweils eine Fresnel-Mikrolinse vorgesehen. Gegenüber der in Fig. 3 dargestellten Fresnel-Mikrolinse 10 ist die Fresnel-Mikrolinse 11 bei dem Ausführungsbeispiel nach Fig. 4 asymmetrisch ausgebildet, so daß die Kamera bezüglich eines mittig angeordneten Photodetektors 4 "zur Seite blickt".

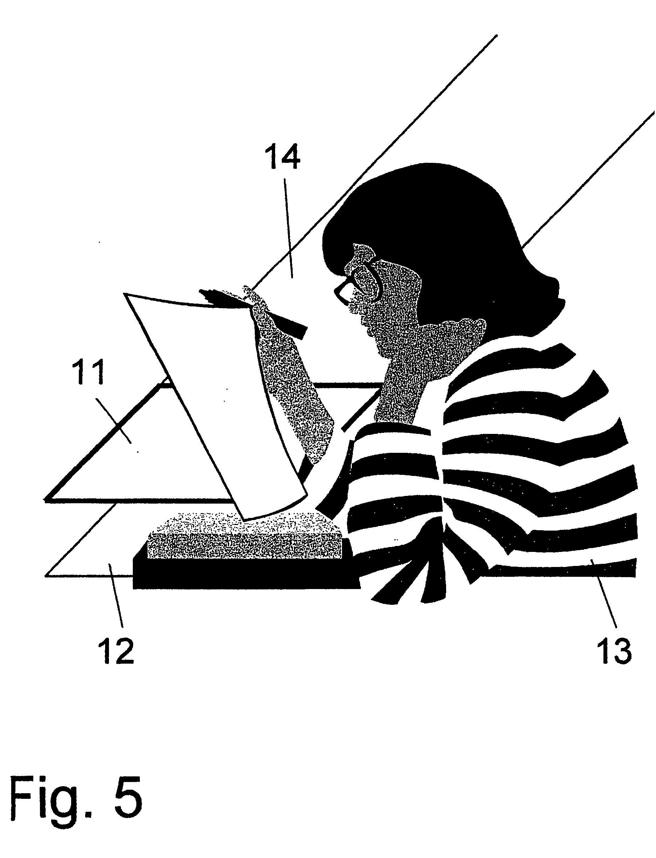

Fig. 5 zeigt ein Anwendungsbeispiel einer erfindungsgemäßen Bildaufnahme- und Wiedergabeeinrichtung, die als Flachbildschirm 11 auf einem Schreibtisch 12 benutzt wird. Eine die erfindungsgemäße Einrichtung benutzende Person 13 kann auf den Bildschirm blicken. Außerdem kann ein Bild des Kopfes der Person 13 aufgenommen und übertragen werden, da er sich im Aufnahmebereich 14 befindet. Gegenstände im Aufnahmebereich 14 werden mit konstantem Abbildungsmaßstab aufgenommen. Eine Fokussierung auf eine bestimmte Gegenstandsweite ist bei der erfindungsgemäßen Bildaufnahmeeinrichtung nicht erforderlich. Der Gegenstand wird scharf abgebildet, solange er sich im Aufnahmebereich 14 befindet.

Bei der in Fig. 5 vorgenommenen Darstellung "blickt" die Kamera in einem von 90° abweichenden Winkel. Bei entsprechender Ausbildung der erfindungsgemäßen Bildaufnahmeeinrichtung kann dieser Winkel elektronisch verstellt und somit an die speziellen Gegebenheiten angepaßt werden.

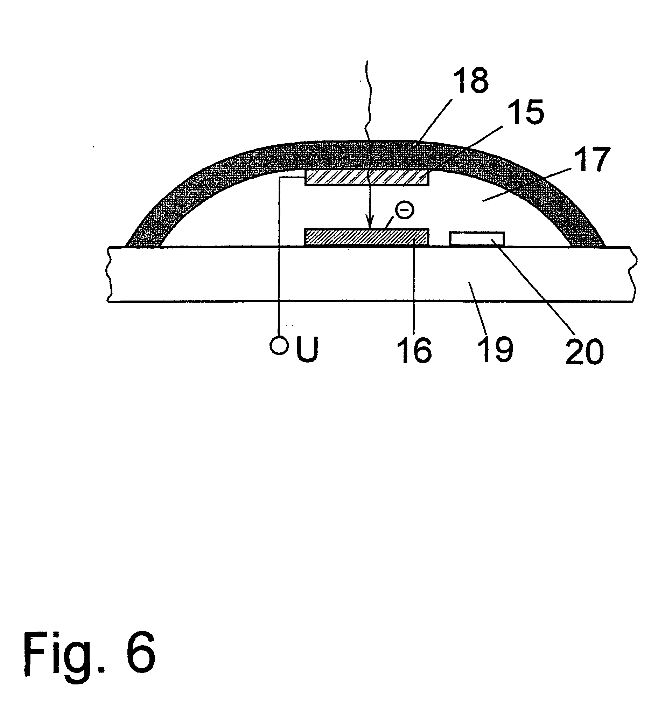

Fig. 6 zeigt schematisch einen Photodetektor, der im wesentlichen aus zwei leitenden Elektroden 15, 16 besteht, die in einem Vakuum 17 angeordnet sind. Im Falle einer Einrichtung zur farbigen Aufnahme ist die den Photodetektor abdeckende Schicht 18 als Farbfilter ausgebildet. Die Elektrode 15 ist transparent und mit einer Beschleunigungsspannung U beaufschlagt, die beispielsweise einige 100 V beträgt. Eintreffende Photonen 20 durchdringen die Elektrode 15 und treffen auf die Elektrode 16 auf, die in geeigneter Weise zur Emission von Photoelektronen ausgebildet, beispielsweise mit Alkalimetallen beschichtet ist. Die austretenden Elektronen werden durch die Beschleunigungsspannung zur Elektrode 15 gezogen. Die durch die austretenden Elektronen erzeugten Spannungsänderungen werden in geeigneter Weise in einem auf dem gleichen Träger 19 angeordneten Verstärker 20 verstärkt. Nicht dargestellte Leiterbahnen und Schaltungen bewirken in an sich bekannter Weise ein sequentielles Abtasten der Ausgangssignale der Photodetektoren, so daß ein Videosignal entsteht.

Als Verstärker eignen sich vorzugsweise sogenannte Einzel-Elektronen-Verstärker. Gegebenenfalls können jeweils drei je einer Grundfarbe zugeordnete Photodetektoren sequentiell an einen Verstärker angeschaltet werden.

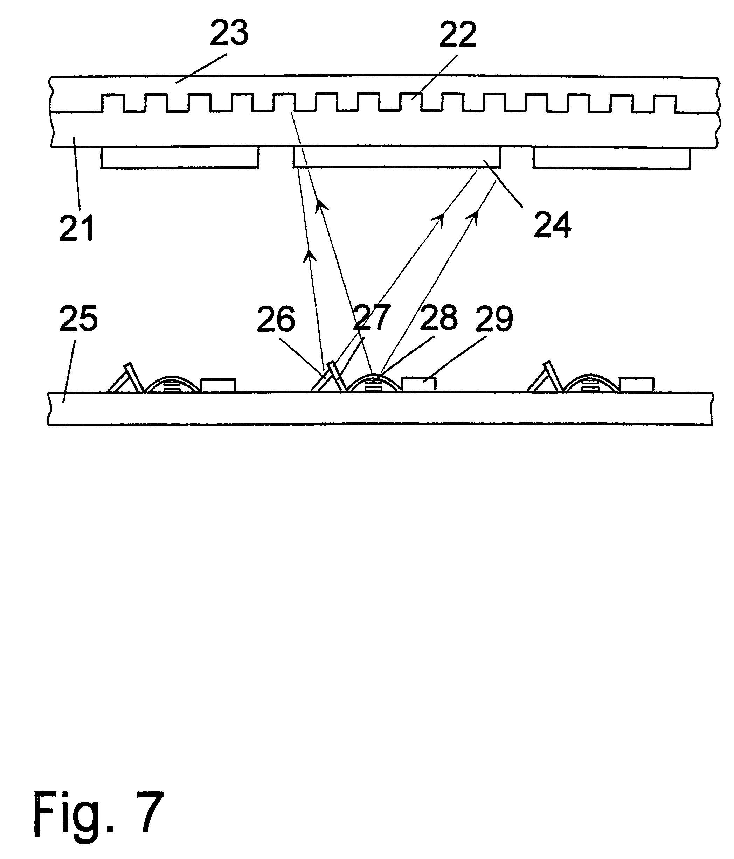

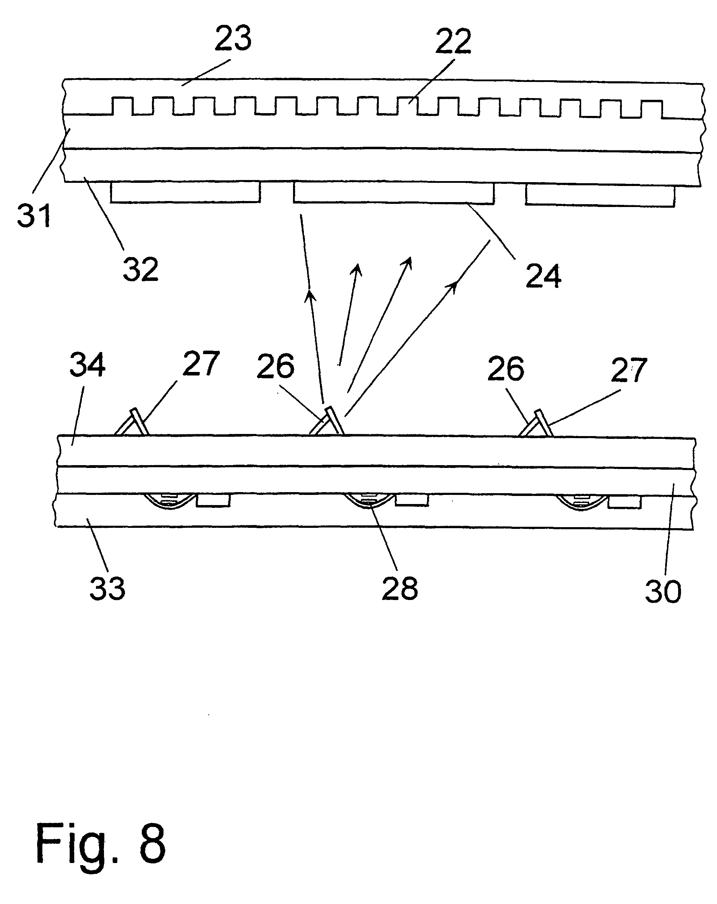

Die Figuren 7 und 8 zeigen schematisch jeweils Ausschnitte einer Bildaufnahme- und Bildwiedergabeeinrichtung, wobei das Ausführungsbeispiel nach Fig. 7 jeweils für die Komponenten der Bildwiedergabeeinrichtung die gleichen Träger wie für die Bildaufnahmeeinrichtung verwendet und beim Ausführungsbeispiel nach Fig. 8 dafür separate Träger vorgesehen sind.

Der transparente Träger 21 bei dem Ausführungsbeispiel nach Fig. 7 ist an seiner Oberseite mit rasterförmig angeordneten Zonenplatten 22 strukturiert, die jeweils eine Kantenlänge von 300 um haben. Ferner ist der transparente Träger 21 mit einer Schutzschicht 23 versehen. An der Innenseite des Trägers 21 befindet sich - ebenfalls transparent ausgeführt - pro Zonenplatte ein Flächenelement 24 des Bildschirms. Als Leuchtstoff für den Bildschirm bzw. dessen Flächenelemente eignen sich beispielsweise Indium-Zinn-Oxid oder Zinn-Oxid.

Im vorgegebenen Abstand dazu - beispielsweise 300 µm - befindet sich der Träger 25 für die Elektronenemitter und die Photodetektoren. Beide sind gegenüber dem Abstand zwischen den Trägern 21, 25 und gegenüber der Zonenplatte 22 und dem Flächenelement 24 wesentlich vergrößert dargestellt. So beträgt beispielsweise die Breite eines Photodetektors einschließlich des Verstärkers etwa 20 µm, während für einen Elektronenemitter etwa 3 µm vorgesehen sind.

Ein geeigneter Elektronenemitter ist in der Patentanmeldung P 44 16 597.8 der Anmelderin im einzelnen einschließlich eines Herstellungsverfahrens mit Hilfe der additiven Elektronen- oder Ionenstrahl-Lithographie unter Verwendung der korpuskularstrahl-induzierten Deposition beschrieben. Eine Erläuterung ist daher zum Verständnis der Erfindung nicht weiter erforderlich. Jeweils ein Elektronenemitter besteht aus mindestens einem Emitterdraht 26 und mindestens einem Extraktordraht 27, der auf etwas höherem Potential als der Emitterdraht 26 liegt. Die austretenden Elektronen werden auf das Flächenelement 24 des Bildschirms beschleunigt. Eine Steuerung der Helligkeit ist sowohl durch das Potential der Extraktordrähte 27 als auch durch die am Flächenelement 24 des Bildschirms anliegende Spannung möglich.

Neben den Elektronenemittern sind auf dem Träger 25 Photodetektoren 28 und Verstärker 29 angeordnet, wie sie beispielsweise im Zusammenhang mit Fig. 6 beschrieben wurden. Das von dem jeweiligen Bildelement des abzubildenden Gegenstandes durch die Zonenplatte 22 einfallende Licht wird auf den Photodetektor 28 fokussiert.

Wegen der Elektronenbewegung von den Elektronenemittern zum Bildschirm ist zwischen den Trägern 21 und 25 ein Vakuum erforderlich. Zu einer Abstandshaltung, die dem durch das Vakuum bedingten Druck widersteht, können in an sich bekannter Weise Glasperlen zwischen die Träger 21, 25 an Stellen eingelegt sein, die zur Abbildung und zur Bildwiedergabe nicht benötigt werden.

Bei dem Ausführungsbeispiel nach Fig. 8 sind außer einem Träger 31, der die Zonenplatten bildet, ein Träger 32 für die Flächenelemente 24 des Bildschirms und außer dem Träger 33 für die Photodetektoren 28 ein Träger 34 für die Elektronenemitter 26, 27 vorgesehen. Zwischen dem Träger 33 und dem Träger 34 befindet sich eine Schutzschicht 30.

## Patentansprüche

1. Bildaufnahmeeinrichtung mit
wenigstens einem fokussierenden Element (2, 10, 11, 22) zur Abbildung jeweils eines Bildelements **dadurch gekennzeichnet, daß**
jedem fokussierenden Element (2, 10, 11, 22) mehrere Photodetektoren (4, 5, 6) zugeordnet sind, die in der Brennebene des jeweiligen fokussierenden Elementes liegen, so daß eine Fokussierung auf eine Gegenstandsweite nicht erforderlich ist, wobei die Photodetektoren (4, 5, 6) in frei wählbarer Weise auslesbar sind, um den Blickwinkel der Bildaufnahmeeinrichtung zu ändern.

2. Bildaufnahmeeinrichtung nach Anspruch 1, **dadurch gekennzeichnet, daß** das fokussierende Element eine refraktive Mikrolinse (2) ist, wobei die fokussierenden Elemente für alle abzubildenden Bildelemente durch Strukturierung eines transparenten Trägers (1) gebildet sind.

3. Bildaufnahmeeinrichtung nach Anspruch 1, **dadurch gekennzeichnet, daß** das fokussierende Element eine refraktive Fresnel-Mikrolinse (10, 11) ist, wobei die fokussierenden Elemente für alle abzubildenden Bildelemente durch Strukturierung eines transparenten Trägers (1) gebildet sind.

4. Bildaufnahmeeinrichtung nach Anspruch 1, **dadurch gekennzeichnet, daß** das fokussierende Element eine Zonenplatte (22) ist, wobei die fokussierenden Elemente für alle abzubildenden Bildelemente durch Strukturierung eines transparenten Trägers (21, 31) gebildet sind.

5. Bildaufnahmeeinrichtung nach einem der Ansprüche 1 bis 4, **dadurch gekennzeichnet, daß** die Strukturen der fokussierenden Elemente (2, 10, 22) rotationssymmetrisch sind, wobei der optische Mittelpunkt in der Mitte der jeweils einem fokussierenden Element (2, 10, 22) zugeordneten Fläche liegt.

6. Bildaufnahmeeinrichtung nach einem der Ansprüche 1 bis 4, **dadurch gekennzeichnet, daß** das fokussierende Element (11) asymmetrisch aufgebaut ist, so daß bei einem mittig angeordneten Photodetektor (4) eine schräge Blickrichtung vorliegt.

7. Bildaufnahmeeinrichtung nach einem der vorhergehenden Ansprüche, **dadurch gekennzeichnet, daß** nicht mit Photodetektoren (4, 5, 6, 28) belegte Flächen eines die Photodetektoren (4, 5, 6, 28) tragenden Trägers (3, 25, 33) absorbierend ausgebildet sind.

8. Bildaufnahmeeinrichtung nach einem der vorhergehenden Ansprüche, **dadurch gekennzeichnet, daß** den Photodetektoren (15, 17) Farbfilter (18) verschiedener Farben zugeordnet sind.

9. Bildaufnahmeeinrichtung nach einem der vorhergehenden Ansprüche, **dadurch gekennzeichnet, daß** zum Auslesen der in jeweils einem Photodetektor in Abhängigkeit der Lichtintensität entstehenden Ladung Einzeln-Elektronen-Tunnel-Bauelemente vorgesehen sind.

10. Bildaufnahmeeinrichtung nach Anspruch 9, **dadurch gekennzeichnet, daß** die Strukturen der Einzeln-Elektronen-Tunnel-Bauelemente kleiner als 10 nm sind.

11. Bildaufnahmeeinrichtung nach einem der vorhergehenden Ansprüche, **dadurch gekennzeichnet, daß** auf dem die Photodetektoren tragenden Träger Leiterbahnen zur Spannungsversorgung und zur Ableitung der Signale durch Lithographie aufgebracht sind.

12. Bildaufnahmeeinrichtung nach einem der vorhergehenden Ansprüche, **gekennzeichnet durch** die gemeinsame Ausbildung mit einem Bildschirm, insbesondere einem Farb-Bildschirm.

13. Bildaufnahmeeinrichtung nach Anspruch 12, **dadurch gekennzeichnet, daß** zwischen dem die fokussierenden Elemente (22) bildenden Träger (21) und dem Träger (25) für die Photodetektoren (28) ein Hohlraum vorgesehen ist, daß an der inneren Seite des Trägers (21) für die fokussierenden Elemente (22) Leuchtstoff-Flächenelemente (24) aufgebracht sind und daß auf dem Träger (25) für die Photodetektoren (28) steuerbare Elektronenquellen (26, 27) angeordnet sind, die jeweils einem Leuchtstoff-Flächenelement (24) zugeordnet sind.

14. Bildaufnahmeeinrichtung nach Anspruch 12, **dadurch gekennzeichnet, daß** für Leuchtstoff-Flächenelemente (24) des Bildschirms ein weiterer Träger (32) auf dem Träger (31) für die fokussierenden Elemente (22) aufliegt und daß für steuerbare Elektronenquellen (26, 27) ein weiterer Träger (34) parallel zum Träger (33) für die Photodetektoren (28) vorgesehen ist.

15. Bildaufnahmeeinrichtung nach einem der Ansprüche 13 oder 14, **dadurch gekennzeichnet, daß** die steuerbaren Elektronenquellen (25, 27) von jeweils mindestens einer Emitterspitze (25) und Extraktordrähten (27) gebildet sind.

16. Bildaufnahmeeinrichtung nach Anspruch 15, **dadurch gekennzeichnet, daß** die Emitterspitzen (26) und die Extraktordrähte (27) durch korpuskularstrahl-induzierte Deposition hergestellt sind.

17. Bildaufnahmeeinrichtung nach einem der Ansprüche 12 bis 16, **dadurch gekennzeichnet, daß** die Elektronenquellen (26, 27) und die Photodetektoren (28) im Zeitmultiplex betreibbar sind.

## Claims

1. Image recording system having at least one focussing element (2, 10, 11, 22) for imaging one pixel each, **characterized in that** assigned to each focussing element (2, 10, 11, 22) are a plurality of photodetectors (4, 5, 6) which lie in the focal plane of the respective focussing element such that there is no need to focus on an object distance, it being possible to read out the photodetectors (4, 5, 6) in a freely selectable way in order to change the viewing angle of the image recording system.

2. Image recording system according to Claim 1, **characterized in that** the focussing element is a refractive microlens (2), the focussing elements being formed for all the pixels to be imaged by structuring a transparent substrate (1).

3. Image recording system according to Claim 1, **characterized in that** the focussing element is a refractive Fresnel microlens (10, 11), the focussing elements being formed for all the pixels to be imaged by structuring a transparent substrate (1).

4. Image recording system according to Claim 1, **characterized in that** the focussing element is a zone plate (22), the focussing elements being formed for all the pixels to be imaged by structuring a transparent substrate (21, 31).

5. Image recording system according to one of Claims 1 to 4, **characterized in that** the structures of the focussing elements (2, 10, 22) are rotationally symmetrical, the optical centre lying in the middle of the surface respectively assigned to a focussing element (2, 10, 22).

6. Image recording system according to one of Claims 1 to 4, **characterized in that** the focussing element (11) is of asymmetric design such that there is an oblique direction of view for a photodetector (4) arranged centrally.

7. Image recording system according to one of the preceding claims, **characterized in that** surfaces of a substrate (3, 25, 33) bearing the photodetectors (4, 5, 6, 28) which are not occupied by photodetectors (4, 5, 6, 28) are designed to be absorbing.

8. Image recording system according to one of the preceding claims, **characterized in that** colour filters (18) of different colours are assigned to the photodetectors (15, 17).

9. Image recording system according to one of the preceding claims, **characterized in that** individual electron tunnel components are provided for reading out the charge produced in one photodetector each as a function of the light intensity.

10. Image recording system according to Claim 9, **characterized in that** the structures of the individual electron tunnel components are smaller than 10 nm.

11. Image recording system according to one of the preceding claims, **characterized in that** conductor tracks for supplying voltage and for providing the signals are applied by lithography to the substrates bearing the photodetectors.

12. Image recording system according to one of the preceding claims, **characterized by** the joint design with a display screen, in particular a colour display screen.

13. Image recording system according to Claim 12, **characterized in that** a cavity is provided between the substrate (21) forming the focussing elements (22) and the substrate (25) for the photodetectors (28), **in that** phosphor surface elements (24) are applied to the inner side of the substrate (21) for the focussing elements (22), and **in that** arranged on the substrate (25) for the photodetectors (28) are controllable electron sources (26, 27) which are each assigned a phosphor surface element (24).

14. Image recording system according to Claim 12, chacterized in that, for phosphor surface elements (24) of the display screen, a further substrate (32) rests on the substrate (31) for the focussing elements (22), and in that, for controllable electron sources (26, 27), a further substrate (34) is provided parallel to the substrate (33) for the photodetectors (28).

15. Image recording system according to one of Claims 13 or 14, **characterized in that** the controllable electron sources (26, 27) are each formed by at least one emitter tip (26) and extractor wires (27).

16. Image recording system according to Claim 15, **characterized in that** the emitter tips (26) and the extractor wires (27) are produced by means of deposition induced by corpuscular radiation.

17. Image recording system according to one of Claims 12 to 16, **characterized in that** the electron sources (26, 27) and the photodetectors (28) can be operated using time-division multiplexing.

## Revendications

1. Dispositif de prise de vue comprenant au moins un élément de mise au point (2, 10, 11, 22) pour représenter à chaque fois un élément d'image, **caractérisé en ce que** plusieurs détecteurs photoélectriques (4, 5, 6) sont associés à chaque élément de mise au point (2, 10, 11, 22), lesquels se trouvent dans le plan focal de l'élément de mise au point respectif de manière à ce qu'une mise au point en fonction de la largeur d'un objet ne soit pas nécessaire, les détecteurs photoélectriques (4, 5, 6) pouvant être lus par sélection libre pour modifier l'angle de visée du dispositif de prise de vue.

2. Dispositif de prise de vue selon la revendication 1, **caractérisé en ce que** l'élément de mise au point est une microlentille réfractaire (2), les éléments de mise au point étant formés pour tous les éléments d'image à représenter en organisant de manière structurée un support transparent (1).

3. Dispositif de prise de vue selon la revendication 1, **caractérisé en ce que** l'élément de mise au point est une microlentille de Fresnel réfractaire (10, 11), les éléments de mise au point étant formés pour tous les éléments d'image à représenter en organisant de manière structurée un support transparent (1).

4. Dispositif de prise de vue selon la revendication 1, **caractérisé en ce que** l'élément de mise au point est une lentille zonée (22), les éléments de mise au point étant formés pour tous les éléments d'image à représenter en organisant de manière structurée un support transparent (21, 31).

5. Dispositif de prise de vue selon l'une des revendications 1 à 4, **caractérisé en ce que** les structures des éléments de mise au point (2, 10, 22) sont à symétrie de révolution, le point central optique se trouvant au centre de la surface respective associée à un élément de mise au point (2, 10, 22).

6. Dispositif de prise de vue selon l'une des revendications 1 à 4, **caractérisé en ce que** l'élément de mise au point (11) est construit de manière asymétrique de manière à obtenir un sens oblique de l'image avec un détecteur photoélectrique (4) disposé au centre.

7. Dispositif de prise de vue selon l'une des revendications précédentes, **caractérisé en ce que** les surfaces qui ne sont pas occupées par les détecteurs photoélectriques (4, 5, 6, 28) d'un support (3, 25, 33) qui supporte les détecteurs photoélectriques (4, 5, 6, 28) sont absorbantes.

8. Dispositif de prise de vue selon l'une des revendications précédentes, **caractérisé en ce que** des filtres colorés (18) de différentes teintes sont associés aux détecteurs photoélectriques (15, 17).

9. Dispositif de prise de vue selon l'une des revendications précédentes, **caractérisé en ce que** des composants à tunnel d'électrons individuels sont prévus pour lire la charge produite à chaque fois dans un détecteur photoélectrique en fonction de l'intensité de la lumière.

10. Dispositif de prise de vue selon la revendication 9, **caractérisé en ce que** les structures des composants à tunnel d'électrons individuels sont inférieures à 10 nm.

11. Dispositif de prise de vue selon l'une des revendications précédentes, **caractérisé en ce que** des pistes conductrices pour l'alimentation électrique et pour la dérivation d'un signal sont appliquées par lithographie sur le support supportant les détecteurs photoélectriques.

12. Dispositif de prise de vue selon l'une des revendications précédentes, **caractérisé par** la configuration en commun avec un écran, notamment un écran couleur.

13. Dispositif de prise de vue selon la revendication 12, **caractérisé en ce qu'**un espace vide est prévu entre le support (21) formant les éléments de mise au point (22) et le support (25) des détecteurs photoélectriques (28), que des éléments de surface luminescents (24) sont appliqués sur le côté intérieur du support (21) des éléments de mise au point (22) et que des sources d'électrons commandables (26, 27) qui sont à chaque fois associées à un élément de surface luminescent (24) sont disposées sur le support (25) des détecteurs photoélectriques (28).

14. Dispositif de prise de vue selon la revendication 12, **caractérisé en ce qu'**un support supplémentaire (32) repose sur le support (31) des éléments de mise au point (22) pour les éléments de surface luminescents (24) de l'écran et qu'un support supplémentaire (34) est prévu en parallèle avec le support (33) des détecteurs photoélectriques (28) pour les sources d'électrons commandables (26, 27).

15. Dispositif de prise de vue selon l'une des revendications 13 ou 14, **caractérisé en ce que** les sources d'électrons commandables (26, 27) sont chacune constituées d'au moins une pointe émettrice (26) et de fils extracteurs (27).

16. Dispositif de prise de vue selon la revendication 15, **caractérisé en ce que** les pointes émettrices (26) et les fils extracteurs (27) sont fabriqués par déposition provoquée par rayonnement corpusculaire.

17. Dispositif de prise de vue selon l'une des revendications 12 à 16, **caractérisé en ce que** les sources d'électrons (26, 27) et les détecteurs photoélectriques (28) peuvent fonctionner en multiplexage temporel.
